# EUROPEAN PATENT SPECIFICATION

(11) **EP 1 683 657 B1**
(45) Date of publication and mention of the grant of the patent: **06.01.2010**
(21) Application number: 05077492.6
(22) Date of filing: 31.10.2005
(51) Int. Cl.: B60C 23/04

(54) **Tyre monitoring unit for a vehicle**
Reifenüberwachungseinheit für Fahrzeuge
Unité de surveillance de pneumatique d'un véhicule

(30) Priority: 21.01.2005 JP 2005013587
(43) Date of publication of application: 26.07.2006
(73) Proprietor: Pacific Industrial Co., Ltd., Ogaki-shi, Gifu-ken 503-8603 (JP)
(72) Inventor: Ito, Yoshitaka, c/o Pacific Industrial Co., Ltd, Ogaki-shi Gifu-ken 503-8603 (JP); Ito, Koji, c/o Pacific Industrial Co., Ltd, Ogaki-shi Gifu-ken 503-8603 (JP)
(74) Representative: Serjeants

(56) References cited:
- EP-A- 1 623 848
- US-B1- 6 805 000

## Description

### 1. Field of the invention

The present invention relates to a tyre monitoring unit for use in an apparatus for monitoring tyre conditions, and more particularly to the tyre monitoring unit having a structure adapted to be appropriately mounted on a wheel rim of a vehicle.

### 2. Description of the Related Arts

Heretofore, there are known tyre condition monitoring apparatuses capable of monitoring tyre conditions such as pneumatic pressure or the like of a vehicle tyre, and various tyre monitoring units for use in those apparatuses have been proposed. Among them, there is known a tyre monitoring unit with a transmitting function, which is provided with electronic parts, battery, antenna and so on. In general, the tyre monitoring unit is placed in a space between a wheel rim and a tyre, and normally mounted on the rim by means of a pin connection or welding. Late published document EP1623848 A1 discloses a housing for accommodating a tyre monitoring unit and a holder for holding said housing secured to a wheel rim. Said holder has an open end portion for receiving therein said housing at one longitudinal end portion of said holder to accommodate the housing. The housing is held by a holding portion in the holder. In the United State Patent No.6,549,125 B2, for example, proposed is a tyre condition sensor unit which is incorporated in a box placed inside a space delineated by the rim and the tyre, and which is fastened to a pin permanently joined to the rim and protruding toward the inside of the tyre. For example, it is disclosed that a housing box is fastened by a retainer to a stud welded to the rim.

Likewise, in the United State Patent No.6,672,150 B2, it is proposed to mount a housing for a tyre pressure sensor on a wheel rim, with a body extended by a plurality of elastically deformable wings of a variable height being fixed by a snap-on attachment to a stud fixed to the rim. And, there are disclosed examples of mechanism for mounting the snap-on attachment to the stud. In the United State Patent No.6,694,807 B2, proposed is a wheel rim having a tyre sensor for a pneumatic tyre, wherein a base seat is fixed on a rim portion having a valve rod, at a location other than the location of the valve rod, and a sensor is embedded in and attached to the base seat for sensing conditions of the pneumatic tyre and transmitting signals. And, the base seat is formed with a bottom and two opposing walls spaced from each other and extending upward from the bottom, including hooks and flaps, to hold the tyre sensor at the opposite sides thereof in the circumferential direction of the rim.

According to the structures as disclosed in the United State Patent Nos.6,549,125 B2 and 6,672,150 B2, it is required to fixedly mount pins or studs on the rim, and it is not so easy to secure them on the rim. In the United State Patent Nos.6,672,150 B2 and 6,694,807 B2, disclosed are embodiments capable of mounting them on the rim according to relatively easy means, which require other members, to result in increase of number of parts, and reliability of them might be questioned after installation.

### SUMMARY OF THE INVENTION

Accordingly, it is an object of the present invention to provide a tyre monitoring unit for mounting on a wheel rim for a vehicle, with a structure for holding the unit to be mounted securely on the rim.

In order to accomplish the above and other objects, the invention provides a tyre monitoring unit according to claim 1 herein.

In the tyre monitoring unit of the invention, the holding portion may be an opening portion formed in the holder to be fitted with the extended portion. The engaging portions may be engaging openings formed on the holder, and the engaging members may include forks formed integrally with the housing to be engaged with and released from the engaging openings.

The tyre monitoring unit may further include a circumferential biasing member for biasing the housing to press the housing to the holder in the circumferential direction of the wheel rim, when the housing is mounted on the wheel rim through the holder. The extended portion of the housing may be formed with an opening opened in a radial direction of the wheel rim when the housing is mounted thereon through the holder, and the circumferential biasing member may be formed integrally with the housing, within the opening of the housing.

The tyre monitoring unit may further include a radial biasing member for biasing the housing to be pressed to the holder in the radial direction of the wheel rim, when the housing is mounted on the wheel rim through the holder. The radial biasing member may be formed with the housing, and arranged to press the housing to the holder.

Preferably, the housing has an end portion which extends from the open end portion outward of the holder when the housing is held therein, and the housing has grip portions formed on the end portion at the opposite lateral sides thereof.

### BRIEF DESCRIPTION OF THE DRAWINGS

The above stated objects and following description will become readily apparent with reference to the accompanying drawings, wherein like reference numerals denote like elements, and in which:
FIG.1 is a perspective view of a tyre monitoring unit mounted on a wheel rim, according to an embodiment of the present invention;
FIG.2 is a plan view of a housing of a tyre monitoring unit in an embodiment of the present invention;
FIG.3 is a front view of a housing of a tyre monitoring unit in an embodiment of the present invention;
FIG.4 is a plan view of a holder for use in an embodiment of the present invention;
FIG.5 is a vertical cross-sectional view of a holder for use in an embodiment of the present invention;
FIG.6 is a transverse cross-sectional view of a housing to be installed in a holder according to an embodiment of the present invention;
FIG.7 is a vertical cross-sectional view of a housing to be installed in a holder, which are mounted on a wheel rim, according to an embodiment of the present invention; and
FIG.8 is a perspective view of a housing to be installed in a holder, as viewed from an open end of the holder, according to an embodiment of the present invention.

### DESCRIPTION OF THE PREFERRED EMBODIMENT

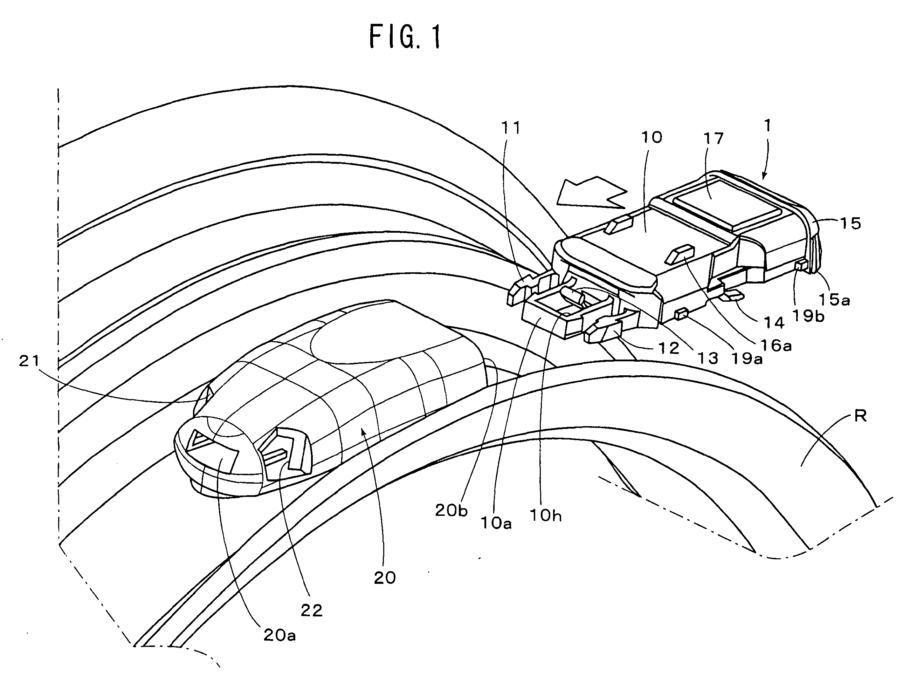

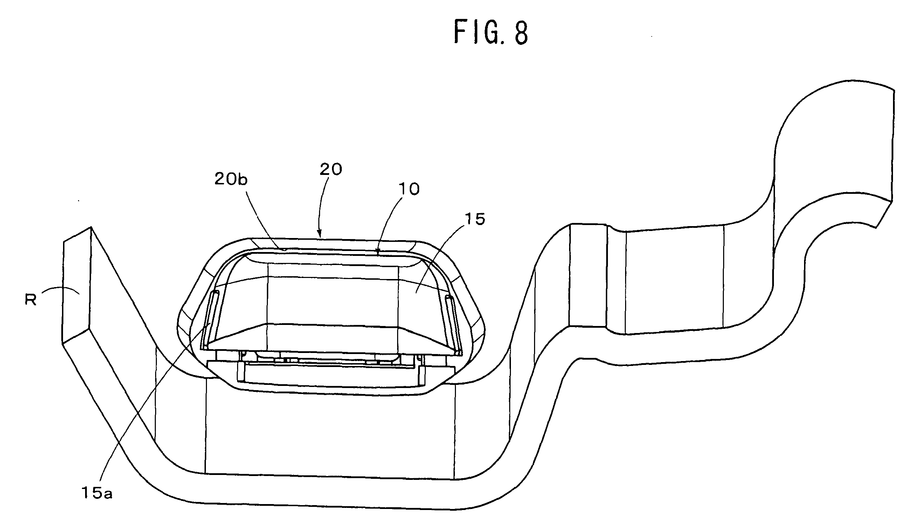

Referring to FIG.1, there is illustrated a tyre monitoring unit according to one embodiment of the present invention, which is used for monitoring tyre conditions such as pneumatic pressure, temperature or the like within a vehicle tyre. As for components of the tyre monitoring unit, various electronic parts, battery, antenna and so on are included, and a transmitting function is provided, so that the unit may be classified as a transmitting unit. Within the scope of the invention, however, the tyre monitoring unit is not limited to the incorporation of a transmitting unit, but may be one with any other function for monitoring the tyre conditions. According to the embodiment as shown in FIG.1, a housing 10 is inserted into a holder 20 which is fixed to a wheel rim R for the vehicle (hereinafter, simply referred to as the rim R) as indicated by a blank arrow, so that the tyre monitoring unit 1 is mounted on the rim R. Then, a tyre (not shown) is fixed to the rim R, so that the tyre monitoring unit 1 is accommodated within a space defined between the rim R and the tyre. In FIG.1, and FIG.8 as referred later, thin lines indicate portions with small radius curvatures to illustrate curved surface portions.

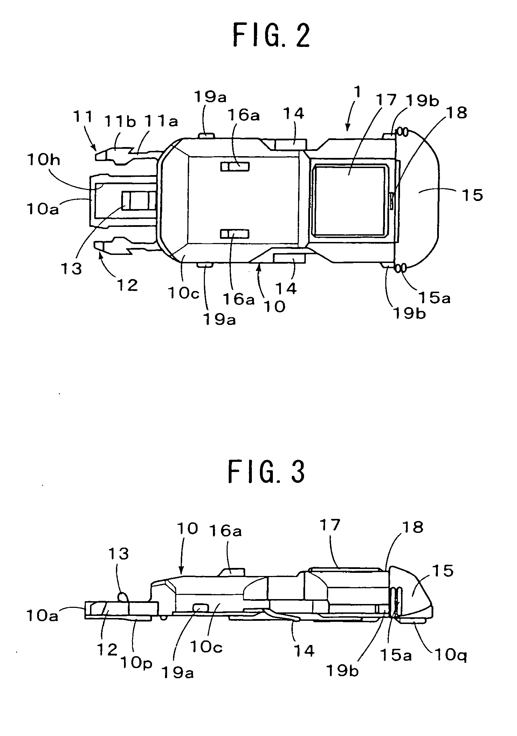

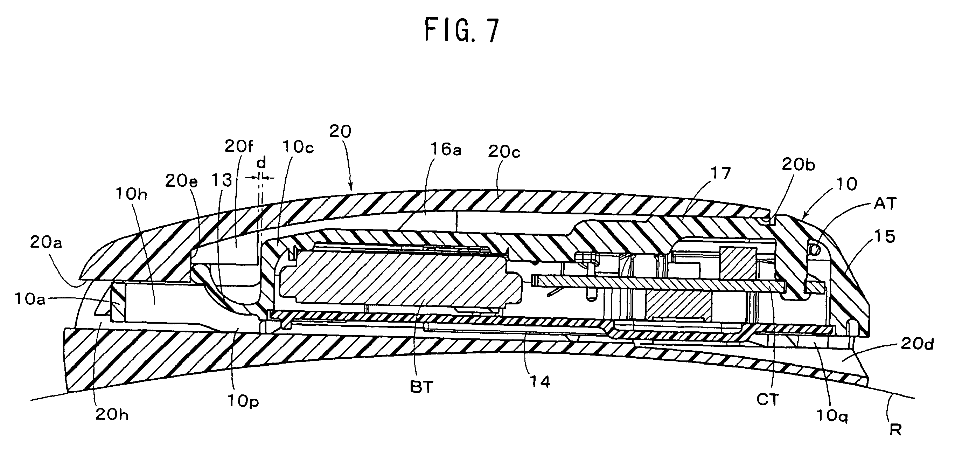

The housing 10 of the tyre monitoring unit 1 is made from synthetic resin to form an extended portion 10a, which extends in the circumferential direction of the rim R, as illustrated in FIGS.2 and 3. Substantially in parallel with the opposite lateral sides, extending from the extended portion 10a in a longitudinal direction thereof, a pair of engaging members 11 and 12 are formed integrally with the housing. The engaging member 11 has a pair of arm portions 11a, 11a, at each tip end of which a fork portion 11b is integrally formed, and the engaging member 12 has the same. In addition, protruding portions 10p and 10q are formed on the lower surface of the housing 10. On the upper surface of the housing 10, there is formed a pair of protruding portions 16a, 16a in parallel with each other, next to which a protruding portion 17 is integrally formed. And, on the opposite lateral surfaces of the housing 10, a pair of guide protrusions 19a and 19b are integrally formed, to serve as appropriate guide members and hold the housing 10 in the holder 20, when the housing 10 is accommodated in the holder 20, as described later. With respect to the components of the tyre monitoring unit 1, various electronic parts, battery BT, antenna AT and so on are mounted on a circuit substrate CT, as shown in a cross-sectional view of FIG.7, and the transmitting function is provided. As they are not directly related to the present invention, explanation of them is omitted herein.

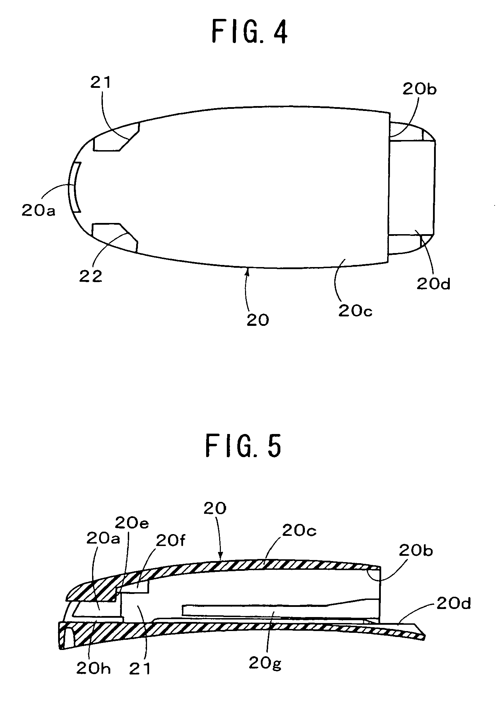

The holder 20 for holding the housing 10 is a boxlike member made from synthetic resin to be fixed on the outer circumferential surface of the rim R, as illustrated in FIGS.4 and 5, by adhesive (not shown) or an adhesive sheet (not shown). As alternative means for fixing the holder 20 on the rim R, a bolt or rivet or the like may be used, but the use of adhesive ensures a sufficient connecting force and is simple, thereby avoiding problems caused by welding or similar techniques. The holder 20 has an open end portion 20b for receiving therein the housing 10 at its longitudinal one end portion, and an opening portion 20a served as the holding portion at the other one end portion of the holder 20. Also, the holder 20 has a pair of engaging openings 21 and 22 which are provided substantially in parallel with the open end portion 20b at the opposite lateral sides thereof to be engaged with the engaging members 11 and 12 of the housing 10, respectively, to serve as the engaging portions. Therefore, when the housing 10 is inserted into the holder 20 through the open end portion 20b, and the extended portion 10a is fitted into the opening portion 20a, then the engaging members 11 and 12 are engaged with the engaging openings 21 and 22, so that the housing 10 is held within the holder 20. Furthermore, as shown in FIG.5, an integral step portion 20e is formed, in the vicinity of the opening portion 20a inside of an upper wall potion 20c of the holder 20, and a stopper portion 20f is integrally formed to extend from the step portion 20e toward the open end portion 20b by a predetermined distance. On the opposite lateral surfaces inside of the holder 20, respectively formed is a guide groove 20g having a relatively larger width at the side of the open end portion 20b, and an approximately even width at the side of the opening portion 20a. A pair of guide rails 20h, 20h are formed in parallel with each other on the lower surface inside of the tip end portion of the holder 20, to serve as appropriate guide members and hold the housing 10 in the holder 20, when the housing 10 is accommodated in the holder 20.

In the present embodiment, the opening portion 20a is formed to penetrate a bottom portion of the box-like holder 20, and to serve as a holding portion for holding the extended portion 10a, for the convenience of resin-forming process. Instead of the opening portion 20a, however, a recess may be formed inside of the holder 20. As for the engaging portions to be engaged with the engaging members 11 and 12, the engaging openings 21 and 22 are formed to penetrate the wall portion of the holder 20, for the convenience of resin-forming process. Instead of the engaging openings 21 and 22, however, recesses (not shown) may be provided, to be engaged with the engaging openings 21 and 22, respectively. As the holder 20 is formed as shown in FIGS.4 and 5 according to the present embodiment, a drawing process can be easily made in the resin-forming process, to be produced rapidly at a low cost. In the case where the rim R is washed after the holder 20 has been adhered to the rim R, even if washing agent was introduced into the holder 20, the washing agent could be drained through the opening portion 20a or the like. Therefore, the washing process can be easily made, without any concern about the washing agent remaining inside of the holder 20. When a recess is formed in lieu of the opening portion 20a, it is desirable to provide a drain hole for the holder 20, additionally.

Furthermore, in the present embodiment, formed on the extended portion 10a is an opening 10h, which opens in a radial direction of the rim R when the housing 10 is mounted on the rim R through the holder 20 as indicated by the blank arrow in FIG.1.

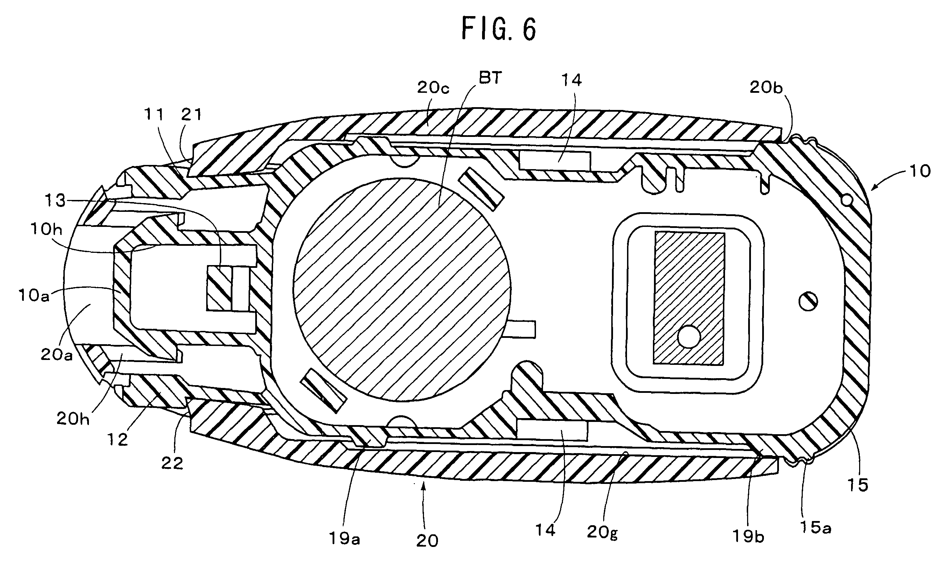

A circumferential biasing member is provided for biasing the housing 10 to press the housing 10 to the holder 20 in the circumferential direction of the rim R. According to the present embodiment, formed integrally with the housing 10 is a resilient tongue plate portion 13 which extends into the opening 10h, as shown in FIG.2. As the housing 10 is inserted into the holder 20 as shown in FIGS.6 and 7, therefore, a tip end of the tongue plate portion 13 comes into contact with the step portion 20e formed inside of the upper wall potion 20c, so that continued movement of the holder 20 in the direction of the blank arrow in FIG.1 develops a resilient force of the tongue plate portion 13 which biases the housing 10 relative to the holder 20, with the engaging members 11 and 12 being engaged with the engaging openings 21 and 22, respectively, to be kept being engaged. As a result, the housing 10 is held within the holder 20, in a stable state without causing a looseness in the circumferential direction of the rim R, i.e., horizontal direction in FIG.7. Instead of the tongue plate portion 13, a spring or the like formed separately from the housing 10 may be provided in the opening 10h.

In addition to the above, a radial biasing member is provided, for biasing the housing 10 to press against the holder 20 in the radial direction of the rim R, when the housing 10 is mounted on the rim R through the holder 20 as indicated by the blank arrow in FIG.1. According to the present embodiment, formed integrally with the housing 10 is a resilient tongue plate portion 14 which extends toward the rim R from a body portion 10c of the housing 10. When the housing 10 is inserted into the holder 20 as shown in FIGS.6 and 7, therefore, a lower surface of the tongue plate portion 14 comes into contact with a lower wall portion 20d, so that the resilient force of the tongue plate portion 14 biases the protruding portions 16a, 16a and the protruding portion 17 to be pressed onto the inner surface of the wall portion 20c of the holder 20. As a result, the housing 10 can be easily accommodated in the holder 20, and thereafter the housing 10 is held within the holder 20, in a stable state without causing a looseness in the radial direction of the rim R, i.e., vertical direction in FIG.7. Instead of the tongue plate portion 14, a spring or the like formed separately from the housing 10 may be provided between the housing 10 and the holder 20. Also, the protruding portions 10p and 10q are formed on the lower surface of the housing 10 to be in contact with the inner surface of the wall portion 20d, so as to protect the looseness in the radial direction of the rim R, i.e., vertical direction in FIG.7.

An end portion 15 is formed integrally with the housing 10, to extend from the open end portion 20b of the holder 20 outward when the housing 10 is held within the holder 20. As shown in FIGS.1-3, 6 and 8, on the end portion 15 at the opposite lateral sides thereof, a plurality of protrusions 15a are formed in parallel with each other, in the radial direction of the rim R. The protrusions 15a are served as grip portions, according to the present embodiment. As shown in FIGS.6 and 8, the housing 10 held in the holder 20 can be drawn from the holder 20, with the protrusions 15a being gripped, after the engagement of the engaging members 11 and 12 with the engaging openings 21 and 22 has been released. Also, as shown in FIGS.2 and 3, a visible indicator 18 such as a recess, a surface moulding or an adhesive label is provided on the upper surface of the body portion 10c, next to the end portion 15, so that the indicator 18 will be hidden by the holder, when the housing 10 is properly held in the holder 20. In the case where the indicator 18 can be observed, therefore, it shows that the housing 10 has not fully inserted into the holder 20. As a result, an error in assembling them can be avoided, so that a secure holding state can be provided.

In order to mount the tyre monitoring unit 1 as constituted above on the rim R, at the outset, the holder 20 is fixed on the outer circumferential surface of the rim R as shown in FIG.1, for example by adhesive (not shown), or by an adhesive sheet (not shown). Next, when the housing 10 is inserted into the holder 20 as indicated by the blank arrow in FIG.1, the extended portion 10a of the housing 10 is guided by the guide rails 20h, 20h to be inserted into the opening portion 20a of the holder 20, and the guide protrusions 19a and 19b of the housing 10 are guided by the guide grooves 20g, 20g formed in the holder 20, so that the body portion 10c is accommodated in the holder 20. As a result, the extended portion 10a is appropriately fitted into the opening portion 20a of the holder 20, so that the engaging members 11 and 12 are securely engaged with the engaging openings 21 and 22, respectively. Thus, the extended portion 10a is held within the opening portion 20a, with the engaging members 11 and 12 formed on the opposite lateral sides of the extended portion 10a, and the engaging state of the engaging members 11 and 12 with the engaging openings 21 and 22 is reliably maintained by the resilient force of the tongue plate portion 13, so that the housing 10 is securely held in the holder 20, enough to act against any foreseeable force which may be caused when it is rotated together with the rim R. Also, as shown in FIG.6, the engaging members 11 and 12 are biased in the lateral direction of the holder 20 to be in tight contact with the inner surface of the holder 20, and the guide protrusions 19b, 19b are in tight contact with the inner surface of the holder 20, so that the housing 10 will not become loose in its lateral direction, i.e., the lateral direction of the holder 20, so that it is securely held within the holder 20 in parallel with the central axis of the rim R.

As shown in FIG.7, after the tip end portion of the tongue plate portion 13 of the housing 10 comes into contact with the step portion 20e in the holder 20, the tongue plate portion 13 is compressed to produce the biasing force. When the body portion 10c of the housing 10 comes into contact with the stopper portion 20f in the holder 20, the tongue plate portion 13 will not be compressed further, so that the resilient force will not exceed a predetermined compression force. With the resilient force biasing the housing 10 toward the open end portion 20b, the housing 10 and the holder 20 are held in such a state that a predetermined clearance (d) is formed between the body portion 10c and the stopper portion 20f. Also, the protruding portions 10p and 10q are forced to be in contact with the inner surface of the wall portion 20d, so that the resilient force of the tongue plate portion 14 biases the protruding portions 16a, 16a and the protruding portion 17 to be pressed onto the inner surface of the wall portion 20c of the holder 20. Consequently, the housing 10 is held stably within the holder 20, without looseness in either the circumferential direction or the radial direction of the rim R.

In use the holder 20 is preferably fixed to the rim R in such a manner that the opening portion 20a is positioned rearwardly, i.e., leftwardly in FIG.1,of the rotational direction of the rim R which corresponds to a forward movement of the vehicle, i.e., rightwardly in FIG.1, in which the rim R rotates in a direction opposite to the blank arrow. Therefore, the housing 10 is supported at the position of the opening portion 20a, to which a relatively larger force is applied, in the rotational direction of the rim R rotating at a high speed when the vehicle moves forwards. Consequently, the housing 10 is held securely in the holder 20. On the other hand, when the vehicle moves backwards, the housing 10 is held in the holder 20, with the engaging members 11 and 12 being engaged with the engaging openings 21 and 22, respectively, against the rotation of the rim R. As the holding force obtained by this engagement would be enough to hold the housing 10 in the holder 20, against the rotation of the rim R when the vehicle moves either forwards or backwards, the direction for mounting the holder 20 on the rim R is not so important in the present embodiment.

As the holder 20 is box-like, and the housing 10 is accommodated in the holder 20, even if a bead portion (not shown) of the tyre hits the holder 20 when the tyre is being mounted on the rim R, the components such as electronic parts held in the housing 10 will not be damaged. To remove the housing 10 from the holder 20, the fork portion 11b of the engaging member 11 as shown in FIG.2 is pressed inward from the outside of the engaging opening 21, and the engaging member 12 is pressed in the same manner, the engagement of the engaging members 11 and 12 with the engaging openings 21 and 22 will be released, so that the housing 10 can be removed from the holder 20, with the protrusions 15a being gripped.

## Claims

1. A tyre monitoring unit for mounting on a wheel rim (R) for a vehicle, comprising a housing (10) for accommodating said tyre monitoring unit and a holder (20) for holding said housing (10) secured to said wheel rim (R), **characterised in that** said housing (10) has an extended portion (10a) configured to extend along a circumference of said wheel rim (R), and at least a pair of engaging members (11 and 12) provided substantially in parallel with said extended portion (10a) at the opposite lateral sides thereof, and
said holder (20) has an open end portion (20b) for receiving therein said housing (10) at one longitudinal end portion of said holder (20) to accommodate said housing (10) in said holder (20), and a holding portion (20a) for holding said extended portion (10a) at the other longitudinal end portion of said holder (20), and at least a pair of engaging portions (21 and 22) provided substantially in parallel with said holding portion (20a) at the opposite lateral sides thereof to be engaged with said engaging members (11 and 12) of said housing (10), wherein said housing (10) is inserted into said holder (20) through said open end portion (20b), with said extended portion (10a) of said housing (10) being held in said holding portion (20a), and with said engaging members (11 and 12) of said housing (10) being engaged with said engaging portions (21 and 22) of said holder (20).

2. A tyre monitoring unit of claim 1, **characterised in that** said holding portion (20a) is an opening portion (20a) formed in said holder (20) to be fitted with said extended portion (10a).

3. A tyre monitoring unit of claim 1, **characterised in that** said engaging portions (21 and 22) are engaging openings formed on said holder (20), and wherein said engaging members (11 and 12) include forks integrally formed with said housing (10) to be engaged with and released from said engaging openings.

4. A tyre monitoring unit of claim 1, **characterised in that** said tyre monitoring unit further comprises a circumferential biasing member (13) for biasing said housing (10) to press said housing (10) to said holder (20) in the circumferential direction of said wheel rim (R), when said housing (10) is mounted on said wheel rim (R) through said holder (20).

5. A tyre monitoring unit cf claim 4, **characterised in that** said extended portion (10a) of said housing (10) is formed with an opening (10h) opened in a radial direction of said wheel rim (R) when said housing (10) is mounted thereon through said holder (20), and said circumferential biasing member (13) is integrally formed with said housing (10), within said opening (10h) of said housing (10).

6. A tyre monitoring unit of claim 5, **characterised in that** said circumferential biasing member (13) includes a tongue plate portion (13) integrally formed with said housing (10) to extend into said opening (10h) of said housing (10), wherein a tip end of said tongue plate portion (13) is in contact with a portion (20f) inside of said holder (20), when said housing (10) is accommodated in said holder (20), to bias said housing (10) in the circumferential direction of said wheel rim (R), with resilient force of said tongue plate portion (13).

7. A tyre monitoring unit of claim 6, **characterised in that** a clearance (d) is formed between said housing (10) and said holder (20) in the circumferential direction of said wheel rim (R), with the resilient force of said tongue plate portion (13) biasing said housing (10) in the circumferential direction of said wheel rim (R).

8. A tyre monitoring unit of claim 1, **characterised in that** said tyre monitoring unit further comprises a radial biasing member (14) for biasing said housing (10) to be pressed to said holder (20) in the radial direction of said wheel rim (R), when said housing (10) is mounted on said wheel rim (R) through said holder (20).

9. A tyre monitoring unit of claim 8, **characterised in that** said radial biasing member is integrally formed with said housing (10), and arranged to press said housing (10) to said holder (20).

10. A tyre monitoring unit of claim 1, **characterised in that** said housing (10) has an end portion (15) extending from said open end portion (20b) outwardly of said holder (20) when said housing (10) is held in the holder (20), and said housing (10) has grip portions (15a) formed on said end portion (15) at the opposite lateral sides thereof.

## Patentansprüche

1. Reifenüberwachungseinheit zur Anbringung an einer Radfelge (R) für ein Fahrzeug, aufweisend ein Gehäuse (10) zum Aufnehmen der Reifenüberwachungseinheit und einen Halter (20) zum Halten des Gehäuses (10) gesichert an der Radfelge (R), **dadurch gekennzeichnet, dass** das Gehäuse (10) einen verlängerten Bereich (10a) aufweist, der dazu ausgestaltet ist, sich entlang eines Umfangs der Radfelge (R) zu erstrecken, und zumindest ein Paar von Eingriffselementen (11 und 12), die im Wesentlichen parallel zu dem verlängerten Bereich (10a) an den gegenüberliegenden lateralen Seiten davon bereitgestellt sind, und
wobei der Halter (20) einen offenen Endbereich (20b) zum Aufnehmen des Gehäuses (10) darin an einem länglichen Endbereich des Halters (20), um das Gehäuse (10) in dem Halter (20) aufzunehmen, und einen Haltebereich (20a) zum Halten des verlängerten Bereichs (10a) an dem anderen länglichen Endbereich des Halters (20) aufweist, sowie zumindest ein Paar von Eingriffsbereichen (21 und 22), die im Wesentlichen parallel zu dem Haltebereich (20a) an den gegenüberliegenden lateralen Seiten davon bereitgestellt sind, um mit den Eingriffselementen (11 und 12) des Gehäuses (10) ineinanderzugreifen, wobei das Gehäuse (10) in den Halter (20) durch den offenen Endbereich (20b) eingeführt wird, wobei der verlängerte Bereich (10a) des Gehäuses (10) in dem Haltebereich (20a) gehalten wird und wobei die eingreifenden Elemente (11 und 12) des Gehäuses (10) mit den Eingriffsbereichen (21 und 22) des Halters (20) ineinandergreifen.

2. Reifenüberwachungseinheit nach Anspruch 1, **dadurch gekennzeichnet, dass** der Haltebereich (20a) ein Öffnungsbereich (20a) ist, der in dem Halter (20) ausgebildet ist, um mit dem verlängerten Bereich (10a) zusammengefügt zu werden.

3. Reifenüberwachungseinheit nach Anspruch 1, **dadurch gekennzeichnet, dass** die eingreifenden Bereiche (21 und 22) Eingriffsöffnungen sind, die an dem Halter (20) ausgebildet sind, und wobei die Eingriffselemente (11 und 12) Zinken aufweisen, die integral mit dem Gehäuse (10) ausgebildet sind, um mit den Eingriffsöffnungen verrastet und davon gelöst zu werden.

4. Reifenüberwachungseinheit nach Anspruch 1, **dadurch gekennzeichnet, dass** die Reifenüberwachungseinheit ferner ein umlaufendes Vorspannelement (13) zum Vorspannen des Gehäuses (10) aufweist, um das Gehäuse (10) in der Umfangsrichtung der Radfelge (R) an den Halter (20) zu drücken, wenn das Gehäuse (10) durch den Halter (20) an der Radfelge (R) angebracht ist.

5. Reifenüberwachungseinheit nach Anspruch 4, **dadurch gekennzeichnet, dass** der verlängerte Bereich (10a) des Gehäuses (10) mit einer Öffnung (10h) ausgebildet ist, die in einer radialen Richtung der Radfelge (R) geöffnet ist, wenn das Gehäuse (10) durch den Halter (20) daran angebracht wird, und das umlaufende Vorspannelement (13) integral mit dem Gehäuse (10) in der Öffnung (10h) des Gehäuses (10) ausgebildet ist.

6. Reifenüberwachungseinheit nach Anspruch 5, **dadurch gekennzeichnet, dass** das umlaufende Vorspannelement (13) einen Zungenplättchenbereich (13) aufweist, der integral mit dem Gehäuse (10) ausgebildet ist, um sich in die Öffnung (10h) des Gehäuses (10) zu erstrecken, wobei ein Spitzenende des Zungenplättchenbereichs (13) sich in Kontakt mit einem Bereich (20f) im Inneren des Halters (20) befindet, wenn das Gehäuse (10) in dem Halter (20) aufgenommen ist, um das Gehäuse (10) in der Umfangsrichtung der Radfelge (R) vorzuspannen, und zwar mit einer Federkraft des Zungenplättchenbereichs (13).

7. Reifenüberwachungseinheit nach Anspruch 6, **dadurch gekennzeichnet, dass** ein Freiraum (d) zwischen dem Gehäuse (10) und dem Halter (20) in der Umfangsrichtung der Radfelge (R) gebildet wird, wobei die Federkraft des Zungenplättchenbereichs (13) das Gehäuse (10) in der Umfangsrichtung der Radfelge (R) vorspannt.

8. Reifenüberwachungseinheit nach Anspruch 1, **dadurch gekennzeichnet, dass** die Reifenüberwachungseinheit ferner ein radiales Vorspannelement (14) zum Vorspannen des Gehäuses (10) aufweist, damit dieses in der radialen Richtung der Radfelge (R) an den Halter (20) gedrückt wird, wenn das Gehäuse (10) durch den Halter (20) an der Radfelge (R) angebracht ist.

9. Reifenüberwachungseinheit nach Anspruch 8, **dadurch gekennzeichnet, dass** das radiale Vorspannelement integral mit dem Gehäuse (10) ausgebildet ist und so angeordnet ist, dass es das Gehäuse (10) an den Halter (20) drückt.

10. Reifenüberwachungseinheit nach Anspruch 1, **dadurch gekennzeichnet, dass** das Gehäuse (10) einen Endbereich (15) aufweist, der sich von dem offenen Endbereich (20b) nach Außen bezüglich des Halters (20) erstreckt, wenn das Gehäuse (10) in dem Halter (20) gehalten wird, und dass das Gehäuse (10) Griffbereiche (15a) aufweist, die an dem Endbereich (15) an den gegenüberliegenden lateralen Seiten davon ausgebildet sind.

## Revendications

1. Unité de contrôle de pneumatique pour le montage sur une jante de roue (R) pour un véhicule, comprenant un boîtier (10) pour recevoir ladite unité de contrôle de pneumatique et un support (20) pour supporter ledit boîtier (10) fixé à ladite jante de roue (R), **caractérisée en ce que** ledit boîtier (10) comporte une partie étendue (10a) configurée de façon à s'étendre le long d'une circonférence de ladite jante de roue (R), et au moins une paire d'éléments de prise (11 et 12) disposés sensiblement parallèlement à ladite partie étendue (10a) sur les côtés latéraux opposés de celle-ci, et **en ce que**
ledit support (20) comporte une partie d'extrémité ouverte (20b) afin de recevoir à l'intérieur de celle-ci ledit boîtier (10) dans une partie d'extrémité longitudinale dudit support (20) pour disposer ledit boîtier (10) dans ledit support (20), et une partie de support (20a) afin de supporter ladite partie étendue (10a) sur l'autre partie d'extrémité longitudinale dudit support (20), et au moins une paire de parties de prise (21 et 22) disposées sensiblement parallèlement à ladite partie de support (20a) sur les côtés latéraux opposés de celle-ci de façon à venir en prise avec lesdits éléments de prise (11 et 12) dudit boîtier (10), ledit boîtier (10) étant inséré dans ledit support (20) par l'intermédiaire de ladite partie d'extrémité ouverte (20b), avec ladite partie étendue (10a) dudit boîtier (10) qui est maintenue dans ladite partie de support (20a), et avec lesdits éléments de prise (11 et 12) dudit boîtier (10) qui viennent en prise avec lesdites parties de prise (21 et 22) dudit support (20).

2. Unité de contrôle de pneumatique selon la revendication 1, **caractérisée en ce que** ladite partie de support (20a) est une partie d'ouverture (20a) formée dans ledit support (20) de façon à recevoir ladite partie étendue (10a).

3. Unité de contrôle de pneumatique selon la revendication 1, **caractérisée en ce que** lesdites parties de prise (21 et 22) sont des ouvertures de prise formées sur ledit support (20), et lesdits éléments de prise (11 et 12) comprenant des fourches formées d'un seul tenant avec ledit boîtier (10) de façon à venir en prise avec lesdites ouvertures de prise et à être libérées de celles-ci.

4. Unité de contrôle de pneumatique selon la revendication 1, **caractérisée en ce que** ladite unité de contrôle de pneumatique comprend de plus un élément de sollicitation circonférentielle (13) pour solliciter ledit boîtier (10) de façon à appuyer ledit boîtier (10) sur ledit support (20) dans la direction circonférentielle de ladite jante de roue (R), lorsque ledit boîtier (10) est monté sur ladite jante de roue (R) par l'intermédiaire dudit support (20).

5. Unité de contrôle de pneumatique selon la revendication 4, **caractérisée en ce que** ladite partie étendue (10a) dudit boîtier (10) comporte une ouverture (10h) ouverte dans une direction radiale de ladite jante de roue (R) lorsque ledit boîtier (10) est monté sur celle-ci par l'intermédiaire dudit support (20), et **en ce que** ledit élément de sollicitation circonférentielle (13) est formé d'un seul tenant avec ledit boîtier (10), à l'intérieur de ladite ouverture (10h) dudit boîtier (10).

6. Unité de contrôle de pneumatique selon la revendication 5, **caractérisée en ce que** ledit élément de sollicitation circonférentielle (13) comprend une partie de plaque de languette (13) formée d'un seul tenant avec ledit boîtier (10) de façon à s'étendre dans ladite ouverture (10h) dudit boîtier (10), dans laquelle une partie d'extrémité de ladite partie de plaque de languette (13) étant en contact avec une partie (20f) à l'intérieur dudit support (20), lorsque ledit boîtier (10) est reçu dans ledit support (20), afin de solliciter ledit boîtier (10) dans la direction circonférentielle de ladite jante de roue (R), avec une force élastique de ladite partie de plaque de languette (13).

7. Unité de contrôle de pneumatique selon la revendication 6, **caractérisée en ce qu'**un espacement (d) est formé entre ledit boîtier (10) et ledit support (20) dans la direction circonférentielle de ladite jante de roue (R), la force élastique de ladite partie de plaque de languette (13) sollicitant ledit boîtier (10) dans la direction circonférentielle de ladite jante de roue (R).

8. Unité de contrôle de pneumatique selon la revendication 1, **caractérisée en ce que** ladite unité de contrôle de pneumatique comprend de plus un élément de sollicitation radiale (14) pour solliciter ledit boîtier (10) de façon à l'appuyer sur ledit support (20) dans la direction radiale de ladite jante de roue (R), lorsque ledit boîtier (10) est monté sur ladite jante de roue (R) par l'intermédiaire dudit support (20).

9. Unité de contrôle de pneumatique selon la revendication 8, **caractérisée en ce que** ledit élément de sollicitation radiale est formé d'un seul tenant avec ledit boîtier (10), et configuré de façon à appuyer ledit boîtier (10) sur ledit support (20).

10. Unité de contrôle de pneumatique selon la revendication 1, **caractérisée en ce que** ledit boîtier (10) comporte une partie d'extrémité (15) s'étendant à partir de ladite partie d'extrémité ouverte (20b) vers l'extérieur dudit support (20) lorsque ledit boîtier (10) est maintenu dans le support (20), et **en ce que** ledit boîtier (10) comporte des parties de saisie (15a) formées sur ladite partie d'extrémité (15) sur les côtés latéraux opposés de celle-ci.
